# EUROPEAN PATENT APPLICATION

(11) **EP 3 534 301 A2**
(43) Date of publication of application: **04.09.2019**
(21) Application number: 19156799.9
(22) Date of filing: 12.02.2019
(51) Int. Cl.: G06K 19/077

(54) **CONTACTLESS CARD DIVIDERS, WALLET-INSERTS, AND WALLETS CONTAINING THE SAME**

(30) Priority: 12.02.2018 US 201815894381
(71) Applicant: Capital One Services, LLC, McLean, Virginia 22102 (US)
(72) Inventor: HERRINGTON, Daniel, New York, NY New York 10038 (US)
(74) Representative: Leonhard, Frank Reimund

(57) **Abstract**

A Contactless card divider 400 comprises a body 420 having a front side and back side and a width therebetween; and a waveguide 440 disposed between the front and back sides. The waveguide 440 is configured to guide a first electromagnetic wave 210 emitted toward the front side through the width of the body 420 to the back side with a first predetermined delay.

## Description

The present disclosure relates to contactless card dividers, wallet-inserts, and wallets containing the same, and more particularly to facilitating the simultaneous use of multiple contactless cards via waveguides and signal blocking cores.

Traditional cards, such as traditional credit cards and hotel-room keys, require physical contact to transfer data. For example, credit cards have a magnetic strip encoded with payment and identification information. In order to transfer this information, the magnetic strip must be slid through a card reader. However, this process may be inconvenient, requiring a consumer to remove the credit card from a wallet, swipe the card to transfer the data, and return the credit card to the wallet. To expedite this process and improve convenience, contactless cards, which can transfer data without requiring direct physical contact, have grown increasingly popular. Instead of requiring a magnetic strip, most contactless cards have an antenna of a type and orientation that provides a projection of an electromagnetic field in a generally horizontal direction, and some types of contactless cards (e.g., contactless farecards used in mass-transit systems) can communicate data via a wireless radio frequency (RF), inductive or similar communication link that does not require electrical contact between the smart card and validator device.

The gaining prevalence of contactless cards has presented a significant limitation for many users. Due to their construction, when multiple contactless cards are stored in a single wallet, the signals emitted from the cards can interfere with each other. Accordingly, users having multiple contactless cards must remove the desired contactless card from their wallet before and after each use, limiting the benefit of a contactless card over a traditional card.

Accordingly, there is a need for improved devices, apparatuses, and systems to facilitate the use of multiple contactless cards within a same container. Embodiments of the present disclosure are directed to this and other considerations.

**A Problem to be solved by the invention** is to facilitate the use of contactless cards and increase the convenience for a user using contactless cards.

**The problem is solved** by a contactless card divider according to claim 1, a contactless card holder according to claim 7 or a contactless card holder according to claim 14.

Disclosed embodiments provide devices, systems, and methods using waveguides or signal blocking cores for facilitating the use of multiple contactless cards. Consistent with the disclosed embodiments, various methods and systems are disclosed. In an embodiment, a contactless card divider is disclosed. The contactless card divider may have a body having a front side and back side and a width therebetween. The contactless card divider may also have a waveguide disposed between the front and back sides. The waveguide may be configured to delay the transmission of electromagnetic (EM) waves travelling through the waveguide by a predetermined time. Accordingly, if two or more contactless cards are disposed on opposite sides of the contactless card divider and the three are presented to a card-reading terminal, the first card (i.e., the card closer to the card reading terminal) will receive an EM field generated by the card-reading terminal and transmit an EM wave in response without hindrance from the waveguide. Meanwhile, the waveguide will delay the EM field generated by the card-reading terminal as it travels through the waveguide to the second card (i.e., the card on the other sides of the waveguide from the card reading terminal), and likewise delay an EM wave transmitted by the second card in response to the EM field. Thus, the EM wave of the first and second cards will arrive at the card-reading terminal in distinguishable time frames, avoiding interference of the EM waves. In some embodiments, one or more waveguides may be disposed in a wallet or other card carrier.

According to other embodiments, a wallet or other card carrier having an EM shield embedded therein is disclosed. The wallet may have slots or other attachment mechanisms to hold a plurality of contactless cards. The EM shield may be disposed within the wallet separating the slots or other attachment mechanisms. Accordingly, EM waves may only be travel from each contactless card in a direction opposite the EM shield. In certain embodiments, the EM shield may absorb EM waves (e.g., with a ferrous core or metal grate). In some implementations, the EM shield may be configured to reflect EM waves. In some implementations one or more waveguides and/or one or more EM shields may be used in various combinations to effectuate the use of three or more contactless cards. Further features of the disclosed design, and the advantages offered thereby, are explained in greater detail hereinafter with reference to specific embodiments illustrated in the accompanying drawings, wherein like elements are indicated be like reference designators.

Reference will now be made to the accompanying drawings, which are not necessarily drawn to scale, and which are incorporated into and constitute a portion of this disclosure, illustrate various implementations and aspects of the disclosed technology and, together with the description, serve to explain the principles of the disclosed technology. In the drawings:
- FIG. 1: illustrates an example a contactless card;
- FIG. 2A: illustrates a related art card carrier;
- FIG. 2B: illustrates an example use of a single contactless card with an example card-reading terminal;
- FIG. 3A: illustrates a card carrier in the related art with multiple contactless cards;
- FIG. 3B: illustrates the simultaneous use of multiple contactless cards in the related art;
- FIGS. 4A and 4B: illustrate the use of a contactless card divider with two contactless cards according to an example embodiment;
- FIGS. 5A-5C: illustrate the use of two contactless cards disposed in a card carrier with an EM shield according to an example embodiment;
- FIG. 6: illustrates a contactless card divider according to an example embodiment;
- FIG. 7: illustrates various dispositions of collections of dividers, EM shields, and contactless cards according to example embodiments; and
- FIGS. 8A-8D: illustrate various card carriers according to certain example embodiments.

Some implementations of the disclosed technology will be described more fully with reference to the accompanying drawings. This disclosed technology may, however, be embodied in many different forms and should not be construed as limited to the implementations set forth herein. The components described hereinafter as making up various elements of the disclosed technology are intended to be illustrative and not restrictive. Many suitable components that would perform the same or similar functions as components described herein are intended to be embraced within the scope of the disclosed electronic devices and methods. Such other components not described herein may include, but are not limited to, for example, components developed after development of the disclosed technology.

It is also to be understood that the mention of one or more method steps does not preclude the presence of additional method steps or intervening method steps between those steps expressly identified. Similarly, it is also to be understood that the mention of one or more components in a device or system does not preclude the presence of additional components or intervening components between those components expressly identified.

The present disclosure is directed to contactless card dividers, wallet-inserts, and wallets containing the same, and more particularly to facilitating the simultaneous use of multiple contactless cards via waveguides and signal blocking cores. In a first aspect, according to exemplary embodiments, a contactless card divider may include a body having a front side and back side and a width therebetween. The contactless card divider may also include a waveguide disposed between the front and back sides, and the waveguide may be configured to guide a first electromagnetic wave emitted toward the front side through the width of the body to the back side with a first predetermined delay.

In some embodiments, the waveguide may be bi-directional and configured to guide a second electromagnetic wave emitted toward the back side through the width of the body to the front side with a second predetermined delay. In other embodiments, the body may be sized and shaped to mirror standard credit cards and fit in standard wallets. For example, one or more of the front and back sides of the body may be substantially rectangular. One or more of the front and back sides of the body may be dimensioned approximately 3.37 inches by 2.125 inches. Additionally, the height and length of the waveguide may be dimensioned approximately 90% of the front side of the body (e.g., such that the waveguide covers about 90% of the surface area of the front side of the body). In further embodiments, the contactless card divider may also include a first holder configured to secure a first contactless card to the contactless card divider and a second holder configured to secure a second contactless card to the contactless card divider. The first holder may be disposed on the front side of the body and the second holder may be disposed on the back side of the body.

According to a second aspect, according to other exemplary embodiments, a contactless card holder may include a body defining a first internal slot for holding a first contactless card, with the first internal slot having opposed front and back ends. The contactless card holder may also include a first waveguide including a front side, a back side, and a width between the front and back sides. The first waveguide may be disposed within the body such that the front side of the first waveguide faces the front end of the first internal slot. The first waveguide may be configured to guide a first electromagnetic wave emitted toward the front side of the first waveguide through the width of the first waveguide to the back side with a first predetermined delay.

In some embodiments, the body of the contactless card holder may further define a second internal slot for holding a second contactless card. The second internal slot may have opposed front and back ends and be positioned proximate to the back side of the first waveguide such that the back side of the first waveguide faces the front end of the second internal slot. The first waveguide may bi-directional and further configured to guide a second electromagnetic wave emitted toward the back side of the first waveguide through the width of the first waveguide to the front side with a second predetermined delay. The body may further define a third internal slot disposed between the first internal slot and the second internal slot, the first waveguide being disposed within the third internal slot.

In other embodiments, the contactless card holder may further include a divider separating the first internal slot from the second internal slot, the first waveguide being disposed in the divider. The contactless card holder may further include a second waveguide including a front side, a back side, and a width between the front and back sides, the second waveguide being disposed within the body such that the front side of the second waveguide faces the back end of the first internal slot. The second waveguide may be configured to guide a second electromagnetic wave emitted toward the front side of the second waveguide through the width of the second waveguide to the back side with a predetermined delay.

In further embodiments, the body may further define a second internal slot for holding a second contactless card, the second internal slot having opposed front and back ends and being positioned proximate to the back side of the first waveguide such that the back side of the first waveguide faces the front end of the second internal slot. The first waveguide may be bi-directional and further configured to guide a second electromagnetic wave emitted toward the back side of the first waveguide through the width of the first waveguide to the front side with a second predetermined delay. The body may further define a third internal slot for holding a third contactless card, the third internal slot having opposed front and back ends and being positioned proximate to the back side of the second waveguide such that the back side of the second waveguide faces the front end of the third internal slot. The second waveguide may be bi-directional and further configured to guide a third electromagnetic wave emitted toward the back side of the second waveguide through the width of the second waveguide to the front side with a third predetermined delay.

In some embodiments, the contactless card holder may further include an electromagnetic shield having front and back sides, the electromagnetic shield disposed within the body proximate to the back end of the first internal slot such that the front side of the electromagnetic shield faces the back end of the first internal slot. The electromagnetic shield may be configured to substantially reduce a strength of an electromagnetic wave emitted toward the front side of the electromagnetic shield.

In other embodiments, the body may further include a second internal slot for holding a second contactless card, the second internal slot having opposed front and back ends and being positioned proximate to the back side of the first waveguide such that the back side of the first waveguide faces the front end of the second internal slot. The body further may further include a third internal slot for holding a third contactless card, the third internal slot having opposed front and back ends and being positioned proximate to the back side of the electromagnetic shield such that the back side of the electromagnetic shield faces the front end of the third internal slot. The electromagnetic shield may be further configured to substantially reduce a strength of a third electromagnetic wave emitted toward the back side of the electromagnetic shield.

According to a further aspect, in accordance with other embodiments, a contactless card holder may include a body defining a first internal slot for slidably receiving a first contactless card and a second internal slot for slidably receiving a second contactless card. The first and second internal slots may each have opposed front and back ends; a divider disposed within the body between the first and second internal slots such that it separates the back end of the first internal slot from the back end of the second internal slot. The contactless card holder may also include an electromagnetic shield disposed within the divider, the electromagnetic shield having front and back sides facing the back ends of the first and second internal slots, respectively, and being configured to substantially reduce a strength of an electromagnetic wave emitted toward one or more of the front and back sides of the electromagnetic shield.

In some embodiments, the contactless card holder may be configured such that a first electromagnetic wave emitted from the first contactless card toward the front side of the first internal slot is substantially unimpeded by the contactless card holder. The contactless card holder may be further configured such that a second electromagnetic wave emitted from the second contactless card toward the front side of the second internal slot is substantially unimpeded by the contactless card holder. The first and second contactless cards may each have a first surface area and the electromagnetic shield may have a second surface area covering approximately 90% of the first surface area.

Reference will now be made in detail to example embodiments of the disclosed technology, examples of which are illustrated in the accompanying drawings and disclosed herein. Wherever convenient, the same references numbers will be used throughout the drawings to refer to the same or like parts.

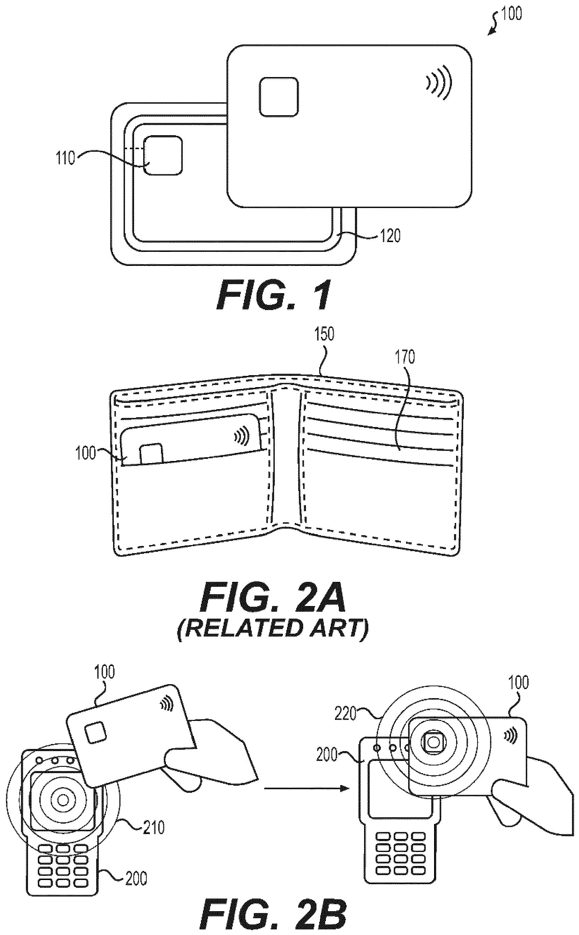

FIG. 1 illustrates an example of a contactless card 100. As shown, contactless card 100 may be sized and shaped (e.g., roughly rectangular) to fit in a standard wallet. For example, the contactless card 100 may be roughly the size and shape of standard credit card (e.g., 85.60 mm x 53.98 mm or 3.375 in x 2.125 in) with rounded corners. However, this is merely an example, and the contactless card 100 may have various shapes and sizes. The contactless card 100 may include a chip 110 and an antenna 120. The chip 110 may contain information related to the contactless card 100 (e.g., account information). The antenna 120 may be configured to receive power from EM fields, which in turn can be used to power transmission of the information contained on the chip 110.

FIG. 2A illustrates a card carrier 150 in the form of a standard wallet from the related art. The wallet includes a plurality of card holders or slots 170 that are each configured to receive one or more standard credit cards or contactless cards 100. For illustrative purposes in FIG. 2A, the single contactless card 100 is disposed in a single slot of the wallet 150.

FIG. 2B illustrates the use of the single contactless card 100 with a card-reading terminal 200. When the single contactless card 100 (either in the wallet 150 or outside of it) is presented near card reading terminal 200, card reading-terminal 200 may emit an electromagnetic (EM) field 210. The EM field 210 activates the contactless card 100 when the contactless card is brought near the card-reading terminal 200. In some cases, the card-reading terminal 200 may emit a pulse of the EM field 210 periodically. Once activated, the contactless card 100 outputs an EM wave 220 to the card-reading terminal 200 to transfer the information contained on its chip 110.

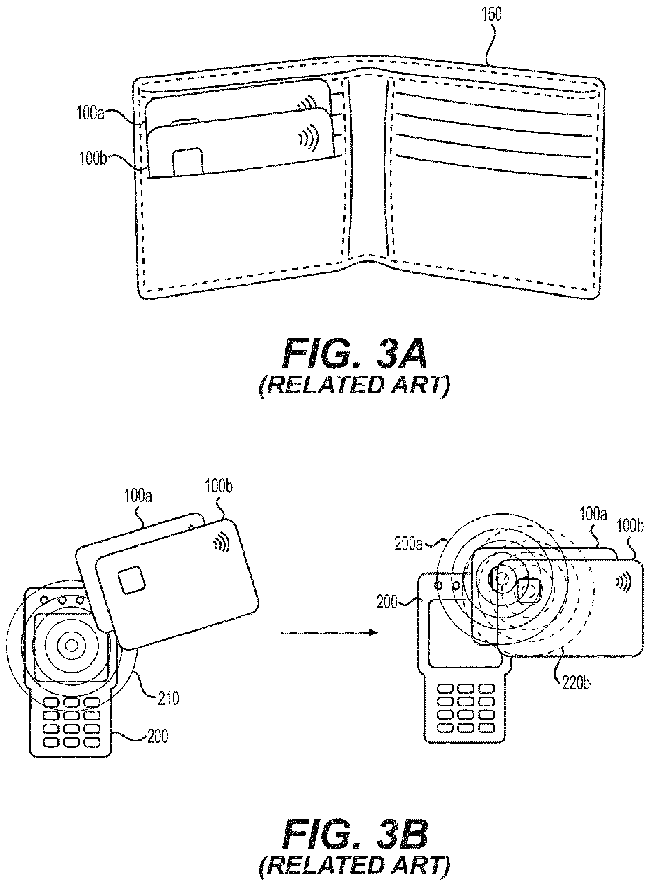

FIG. 3A illustrates a card carrier 150 in the form of a standard wallet from the related art. In contrast with the example shown in FIG. 2A, the card carrier 150 illustrated in FIG. 3A holds first and second contactless cards 100a and 100b in separate slots 170.

FIG. 3B illustrates the simultaneous use of multiple contactless cards in the related art. Two contactless cards 100a and 100b (either in the wallet 150 or outside of it) are presented near a card reading terminal 200. The card reading-terminal 200 emits an EM field 210. The EM field 210 activates both the first and second the contactless cards 100a and 100b near simultaneously when the contactless cards 100a and 100b are brought near the card-reading terminal 200. Once activated, the contactless cards 100a and 100b substantially simultaneously output respective EM waves 220a and 220b to the card-reading terminal 200 to transfer the information contained on their respective chips 110. The close proximity of first and second contactless cards 100a and 100b causes temporal proximity of EM waves 220a and 220b, which may interfere with one another and prevent the card-reading terminal 200 from reading either or the desired one of contactless cards 100a and 100b.

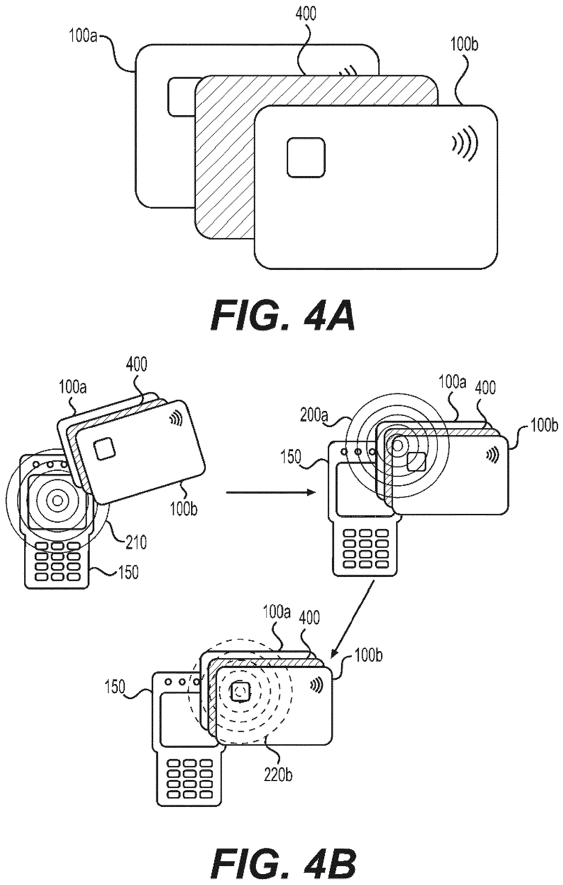

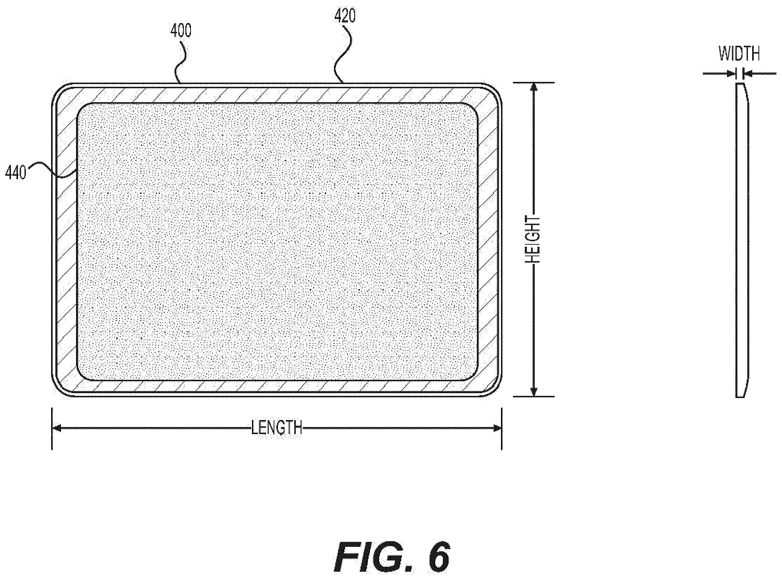

FIGS. 4A and 4B illustrate the use of a contactless card divider 400 with two contactless cards according to an example embodiment. As shown in FIG. 4A, the divider 400 may be disposed between the first contactless card 100a and the second contactless card 100b. The divider 400 may be configured to delay propagation of EM waves through a width of the contactless card. For example, the divider 400 may include a waveguide that guides EM waves through a width of the divider in a delayed manner. In some cases, the divider 400 may be a physical card, for example, as described below in more detail with reference to FIG. 6. However, this is merely an example. In some cases, the first contactless card 100a and the second contactless card 100b may be disposed in a card carrier 150 (e.g., a wallet), and the divider 400 may separate the first and second contactless cards 100a and 100b.

FIG. 4B illustrates the use of the contactless card divider 400 with the two contactless cards according to an example embodiment. The two contactless cards 100a and 100b (either in the wallet 150 or outside of it) with divider 400 separating them are presented near the card reading terminal 200. Card reading-terminal 200 emits EM field 210. The EM field 210 activates the first contactless card 100a followed, after a delay, by the second contactless card 100b. This delay may be accomplished by a delay in propagation of the EM field through the divider 400. Once activated, the first contactless card 100a outputs EM wave 220a to the card-reading terminal 200 to transfer the information contained on its chip 110. Similarly, the second contactless card 100b outputs EM wave 220b to the card-reading terminal 200 to transfer the information contained on its chip 110. The divider 400 may also delay EM wave 220b on its path from the second contactless card 100b to the card-reading terminal 200. Accordingly, unlike in FIG. 3B, EM wave 220a and EM wave 220b may avoid interfering with one another, thereby enabling the card-reading terminal 200 to read from the desired one of contactless cards 100a and 100b. The divider 400 may be configured to delay EM waves passing therethrough a sufficient amount for the card-reading terminal 200 to distinguish EM wave 220a from EM wave 220b (e.g., in accordance with one or more standard for a card-reading terminal 200). In some cases, the divider 400 may be configured to delay EM signals for approximately half the time separation required for the card reading terminal 200 to distinguish EM waves 220a and 220b, as the propagation of the EM field 210 from the card reading terminal 200 is also delayed. As a non-limiting example, the divider 400 may be configured to delay EM waves passing therethrough by, for example, .25 seconds. The card-reading terminal 200 may be configured to distinguish between EM waves 220 emitted from numerous cards to record information from only a single contactless card 100.

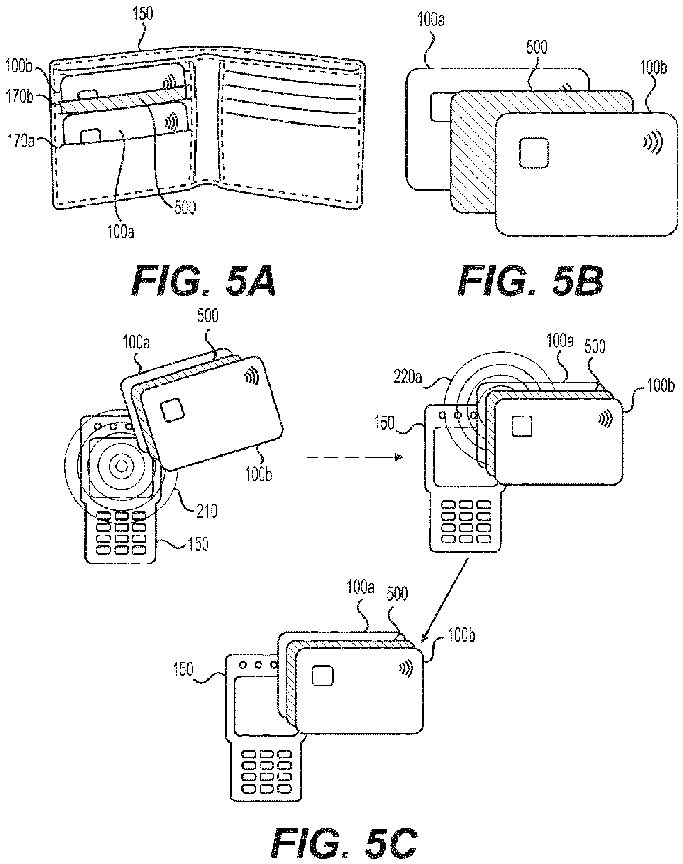

FIGS. 5A-5C illustrate the use of two contactless cards disposed in the card carrier 150 (e.g., a wallet) with an EM shield 500 according to an example embodiment. In FIG. 5A, the card carrier 150 includes a plurality of slots 170a and 170b separated by the EM shield 500, as shown more clearly in FIG. 5B. The EM shield 500 may be incorporated into card carrier 150. For example, the EM shield 500 may be integrated within a separator of the card carrier 150 that divides slot 170a from slot 170b. In some cases, the EM shield 500 may be configured as a metallic weave as part of the separator of the card carrier 150. In some implementations, the separator of the card carrier 150 may include front and back layers forming a receptacle for EM shield 500. The first contactless card 100a and the second contactless card 100b are disposed, respectively, in slots 170a and 170b. The EM shield 500 may be configured to prevent or minimize a propagation of EM waves therethrough. As a non-limiting example, the EM shield 500 may include one or more of a ferrite core and a metal grate to absorb EM waves. In some cases, the EM shield 500 may be configured to reflect EM waves instead of absorbing EM waves. For example, EM shield 500 may utilize guiding material (e.g., similar to the waveguide discussed below with reference to FIG. 6) to reflect the signal within the EM shield 500 and back towards the corresponding first and second contactless cards 100a and 100b. Thickness, type, shape, layout, and conductivity of the material may be selected to adjust the amount of signal that is absorded versus reflected through the EM shield 500.

As shown in FIG. 5C, the two contactless cards 100a and 100b (e.g., in the wallet 150) with the EM shield 500 disposed therebetween may be presented near the card reading terminal 200. The card reading-terminal 200 emits EM field 210. The EM field 210 activates the first contactless cards 100a when the contactless cards 100a and 100b are brought near the card-reading terminal 200. Once activated, the first contactless card 100a outputs EM wave 220a to the card-reading terminal 200 to transfer the information contained on its chip 110. However, the EM shield 500 may prevent EM field 210 from activating the second contactless card 100b by at least partially absorbing or reflecting EM field 210. Thus, the EM wave 220b may not be produced and, therefore, the EM wave 220b cannot interfere with EM wave 220a. In some embodiments, the EM field 210 may still activate both the first and second contactless cards 100a and 100b. Thus, both EM wave 220a and EM wave 220b will be produced. However, the EM shield 500 may be configured to prevent the EM wave 220b from reaching the card-reading terminal 200 (e.g., either by absorbing or reflecting EM wave 220b) at the same time as the EM wave 220a, thereby avoiding interference between the waves. If a disposition of the contactless cards 100a and 100b and the EM shield 500 were reversed, (i.e., the second contactless card 100b was located on the side of EM shield 500 closer to the card-reading terminal 200) only the second contactless card 100b would be activated by the EM field 210, or the EM wave 220a may be delayed by the EM shield 500 to avoid it from interfering with the EM wave 220b. Accordingly, different contactless cards 100 may be activated by simply reorienting the card carrier 150.

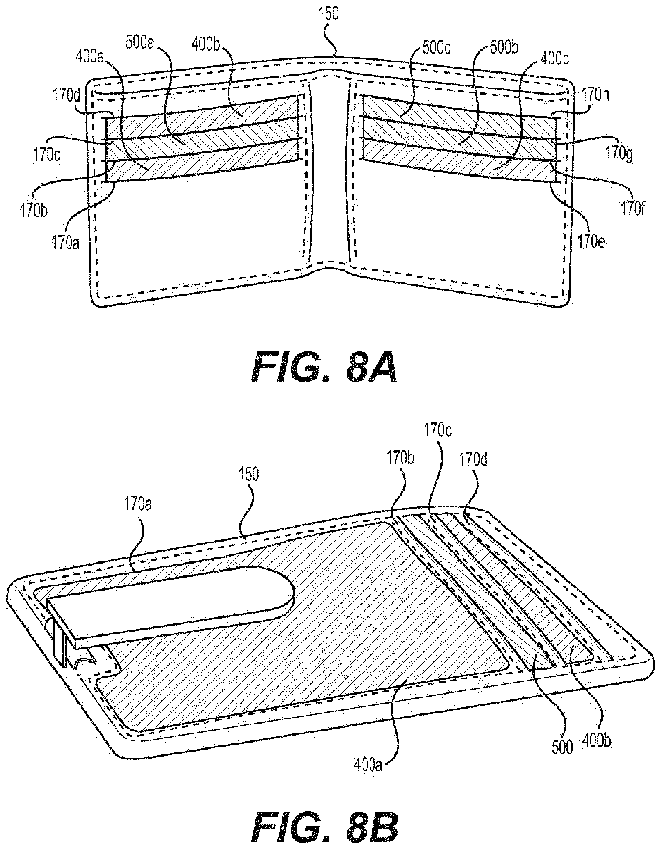

FIG. 6 illustrates an example embodiment of the contactless card divider 400 in additional detail. As shown, the contactless card divider 400 may include a body 420 and a waveguide 440 disposed therein. The body 420 may be formed, as a non-limiting example, of a plastic material. The waveguide 440 may be configured to delay a propagation of an EM wave through width of the divider 400. In some cases, a height and length of the waveguide 440 is dimensioned approximately 90% of the front side of the body 420. That is, the waveguide 440 may be sized and shaped such that its front surface area covers about 90% of the surface area of the front side of the body 420. In some embodiments, the divider 400 may be sized and shaped to roughly mirror a standard credit card (e.g., rectangular with rounded edges and dimensions of about 85.60 mm x 53.98 mm or 3.375 in x 2.125 in). In some cases, the width of the divider 400 may be determined based on a desired propagation delay. For example, in some embodiments, the divider 400 may be approximately 19 mm thick. Although the divider 400 is illustrated as a distinct entity, this is merely an example. In some cases, the divider 400 may be integrated into the card carrier 150, for example as discussed in more detail below with reference to FIGS. 8A-8D.

As a non-limiting example, the waveguide may utilize obtuse angles of a guiding material (for example, of a conductive material) to guide the signal through the divider. The obtuse angles may cause an EM signal to reflect between portions of the guiding material. In implementations, the guiding materials may be organized to reflect the signals through a wave-like structure without greatly reducing its power too much. In some cases, the maze-like structure may be a substantially circular or spiral structure. In certain cases, the guiding material may be copper or silver.

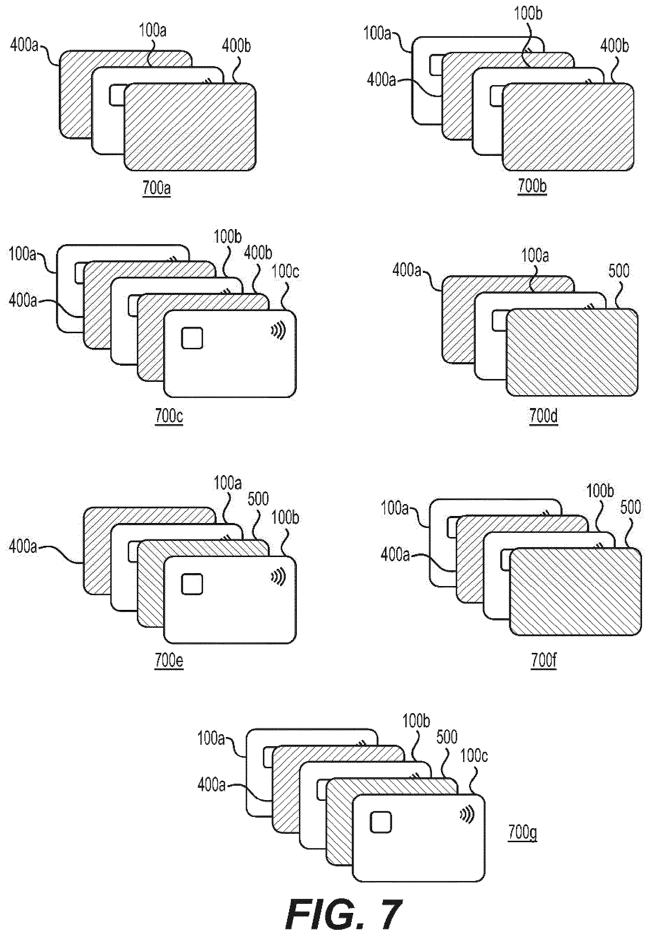

FIG. 7 illustrates various dispositions of collections of the dividers 400, the EM shields 500, and the contactless cards 100 according to example embodiments. As shown, the dividers 400, EM shields 500, and contactless cards 100 are illustrated stacked and offset in stacks 700a-g. The term frontward will be used to describe a direction out of a top of the stack and backward used to describe a direction out of a bottom of the stack. When the stacks are described as placed near a card-reading terminal 200, it should be assumed that the bottom of the stack is nearest the card-reading terminal 200 unless otherwise noted. FIG. 7 illustrates example dispositions, and alternative dispositions are contemplated in the present disclosure.

The stack 700a includes the single contactless card 100a disposed between first and second dividers 400a and 400b. Both dividers 400a and 400b may be configured to delay a propagation of EM waves therethrough. Accordingly, when the stack 700a is placed near the card-reading terminal 200, the activation of the contactless card 100a and the transmission of EM wave 220a may be delayed both frontwards and backwards.

The stack 700b has, in order, the first contactless card 100a, the first divider 400a, the second contactless card 100b, and the second divider 400b. Both dividers 400a and 400b may be configured to delay a propagation of EM waves therethrough. Accordingly, when the stack 700b is placed near the card-reading terminal 200, the activation of the first contactless card 100a and the transmission of EM wave 220a may not be delayed in a backward direction. However, the propagation of EM wave 220a may be delayed by both the first and second dividers 400a and 400b in a frontward direction. Meanwhile, when the stack 700b is placed near the card-reading terminal 200, the activation of the second contactless card 100b and the transmission of EM wave 220b may be delayed both frontwards and backwards by the first and second dividers 400a and 400b, respectively.

The stack 700c is the same as the stack 700b with a third contactless card 100c stacked on top of the second divider 400b. Accordingly, the effects on the first and second contactless cards 100a when the stack 700c is placed near the card-reading terminal 200 are like those described with reference to the stack 700b. When the stack 700c is placed near the card-reading terminal 200, the activation of the third contactless card 100c and the transmission of EM wave 220c may be delayed in the backwards direction by both the first and second dividers 400a and 400b. However, the transmission of EM wave 200c may not be delayed in a frontward direction.

The stack 700d includes the single contactless card 100a disposed between the first divider 400a and the EM shield 500. Accordingly, when the stack 700d is placed near the card-reading terminal 200, the activation of contactless card 100a and the transmission of EM wave 220a may be delayed in the backwards direction. However, EM wave 220a will be prevented (or diminished) from propagating in the forwards direction through the EM shield 500. If stack 700d is reversed (i.e., arranged in the opposite order) and placed near the card-reading terminal 200, the activation of contactless card 100a and the transmission of EM wave 220a may be prevented (or diminished) by the EM shield 500.

The stack 700e is the same as the stack 700d with the second contactless card 100b stacked on top of the EM shield 500. Accordingly, when the stack 700e is placed near the card-reading terminal 200, the contactless card 100a may behave the same as that described above with reference to the stack 700d. When the stack 700c is placed near the card-reading terminal 200, the activation of the second contactless card 100b and the transmission of EM wave 220b may be prevented (or diminished) by the EM shield 500. However, if the stack 700e is reversed (i.e., arranged in the opposite order) and placed near the card-reading terminal 200, the activation of the second contactless card 100b and the transmission of EM wave 220b may proceed unimpeded by the divider 400a and the EM shield 500.

The stack 700f includes the first contactless card 100a, the first divider 400a, the second contactless card 400b, and the EM shield 500. Accordingly, when the stack 700f is placed near the card-reading terminal 200, the activation of the first contactless card 100a and the transmission of EM wave 220a may not be delayed in a backward direction. However, the propagation of EM wave 220a may be delayed by the divider 400a in a frontward direction and ultimately prevented (or diminished) by the EM shield 500. Meanwhile, when the stack 700f is placed near the card-reading terminal 200, the activation of the second contactless card 100b and the transmission of EM wave 220b may be delayed in the backwards direction by the divider 400a, and the propagation of EM wave 220b may be prevented (or diminished) by the EM shield 500 in the frontward direction.

The stack 700g is the same as stack 700f with the third contactless card 100c stacked on top of the EM shield 500. Accordingly, the effects on the first and second contactless cards 100a when the stack 700c is placed near the card-reading terminal 200 are similar to those described with reference to the stack 700b. Meanwhile, when the stack 700g is placed near the card-reading terminal 200, the third contactless card 100c will behave similarly to the second contactless card 100b described above with reference to the stack 700e.

FIGS. 8A-8D illustrate various card carriers according to certain example embodiments. In FIGS. 8A-8D, the contact card dividers 400 and the EM shields 500 are describes as separating various card holders 170 (e.g., slots 170 or clips 170). It will be recognized that, unless explicitly limited by the disclosure, the contact card dividers 400 and the EM shields 500 may be substituted to effect different use cases. However, it will be recognized that particular orders and selections of the contact card dividers 400 and the EM shields 500 described herein may provide various enhancements to user experiences.

The standard bi-fold wallet 150 shown in FIG. 8A 150 includes four slots 170a-d on its left side and four slots 170e-h on its right side. Each of the slots 170a-h may be configured (e.g., sized and shaped) to receive a contactless card (e.g., the contactless card 100). The first divider 400a separates the first slot 170a from the second slot 170b, the first EM shield 500a separates the second slot 170b from the third slot 170c, and the second divider 400b separates the third slot 170c from the fourth slot 170d. Meanwhile, a third divider 400c separates the fifth slot 170e from the sixth slot 170f, a second EM shield 500b separates the sixth slot 170f from the seventh slot 170g, and a third EM shield separates the seventh slot 170g from the eight slots 170h.

The following description assumes a contactless card is disposed in each slot 170a-h. If the left side of the wallet 150 is moved near the card-reading terminal 200 with the first slot 170a closest to the terminal 200, the card in the first slot 170a will be activated without delay, the card in the second slot 170b will be activated but delayed by the first divider 400a, and the cards in the third and fourth slots 170c and 170d will not be activated (because of the first EM shield 500a). Meanwhile, if the left side of the wallet 150 is moved near terminal 200 with the fourth slot 170d closest to the terminal 200, the card in the fourth slot 170d will be activated without delay, the card in the third slot 170c will be activated but delayed by the second divider 400b, and the cards in the first and second slots 170a and 170b will not be activated (because of the first EM shield 500a).

If the right side of the wallet 150 is moved near the card-reading terminal 200 with the fifth slot 170e closest to the terminal 200, the card in the fifth slot 170 will be activated without delay, the card in the sixth slot 170f will be activated but delayed by the third divider 400c, and the cards in the seventh and eighth slots 170g and 170h will not be activated (because of the second and third EM shields 500b and 500c). Meanwhile, if the right side of the wallet 150 is moved near the terminal 200 with the eighth slot 170h closest to the terminal 200, the card in the eighth slot 170h will be activated without delay, and the cards in the fifth through seventh slots 170e and 170g will not be activated (because of the second and third EM shields 500b and 500c). It will be noted that the card in the seventh slot 170g is not activated in any orientation as the second and third EM shields 500b and 500c prevent the EM field 210 from reaching slot 170g. Therefore, slot 170g may be used to protect an important contactless card 100 from nefarious access.

FIG. 8B illustrates another exemplary embodiment of the card carrier 150 in the form of a card case. Card case 150 includes a clip 170a and three slots 170b-d. Each of the clip 170a and slots 170b-d may be configured to receive a contactless card (e.g., the contactless card 100). The first divider 400a separates the clip 170a from the first slot 170b, the EM shield 500 separates the first slot 170b from the second slot 170c, and the second divider 400b separates the second slot 170c from the third slot 170d. Contactless cards disposed in card case 150 may behave similarly to those described above in FIG. 8A with reference to the left side of the wallet 150 as the order of the dividers 400 and the EM shields 500 is the same (i.e., if a contactless card is placed in each card holder 170 of card case 150, it would form a stack alternative a contactless card with the first divider 400a, the EM shield 500, and the second divider 400b).

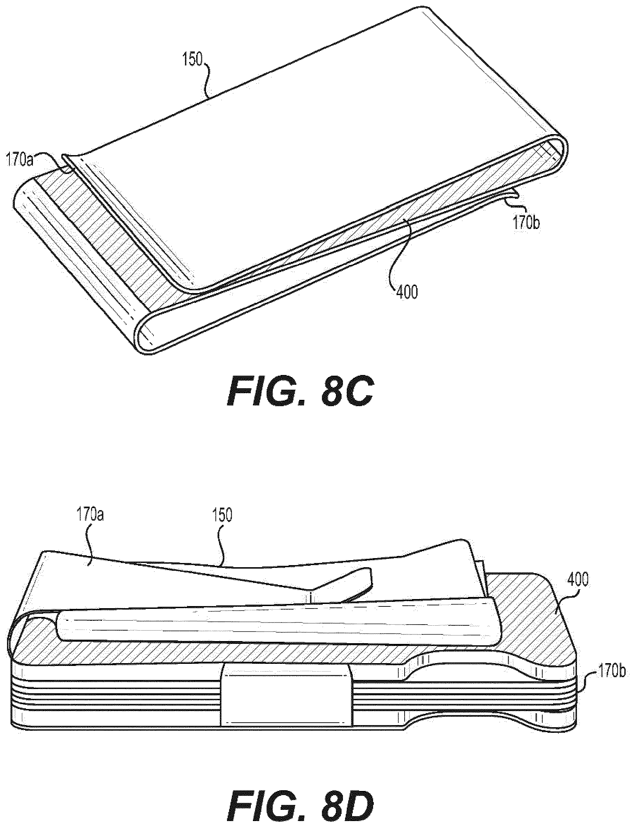

FIG. 8C illustrates another exemplary embodiment of the card carrier 150 in the form of a money clip. The money clip 150 includes the first clip 170a and a second clip 170b. The first clip 170a and the second clip 170b may each receive respective first and second contactless cards 100a and 100b. The first and second clips 170a and 170b are separated by the contactless card divider 400. If money clip 150 is moved near the card-reading terminal 200 with the first clip 170a closest to the terminal 200, the first contactless card 100a may be activated without delay, while the activation of the second contactless card 100b may be delayed by the divider 400. Similarly, if money clip 150 is moved near the card-reading terminal 200 with the second clip 170b closest to the terminal 200, the second contactless card 100b may be activated without delay, while the activation of the first contactless card 100a may be delayed by the divider 400.

FIG. 8D illustrates another exemplary embodiment of the card carrier 150 in the form of an elastic band money clip. Money clip 150 includes the clip 170a and an elastic pocket 170b. The clip 170a and the pocket 170b may each receive respective first and second contactless cards 100a and 100b. The clip 170a and pocket 170b are separated by the contactless card divider 400. If money clip 150 is moved near the card-reading terminal 200 with the clip 170a closest to the terminal 200, the first contactless card 100a may be activated without delay, while the activation of the second contactless card 100b may be delayed by the divider 400. Similarly, if money clip 150 is moved near the terminal 200 with the pocket 170b closest to the terminal 200, the second contactless card 100b may be activated without delay, while the activation of the first contactless card 100a may be delayed by the divider 400.

Certain embodiments and implementations of the disclosed technology may be described above with reference to block and flow diagrams of systems and according to example embodiments or implementations of the disclosed technology. It will be understood that some blocks of the block diagrams and flow diagrams may not necessarily need to be performed in the order presented, may be repeated, or may not necessarily need to be performed at all, according to some embodiments or implementations of the disclosed technology. One of ordinary skill will understand that the order of certain elements of the block diagrams and flow diagrams may be altered unless explicitly required to operate in a particular order. Accordingly, blocks of the block diagrams and flow diagrams support combinations of means for performing the specified functions, and combinations of elements or steps for performing the specified functions.

In this description, numerous specific details have been set forth. It is to be understood, however, that implementations of the disclosed technology may be practiced without these specific details. In other instances, well-known methods, structures and techniques have not been shown in detail in order not to obscure an understanding of this description. References to "one embodiment," "an embodiment," "some embodiments," "example embodiment," "various embodiments," "one implementation," "an implementation," "example implementation," "various implementations," "some implementations," etc., indicate that the implementation(s) of the disclosed technology so described may include a particular feature, structure, or characteristic, but not every implementation necessarily includes the particular feature, structure, or characteristic. Further, repeated use of the phrase "in one implementation" does not necessarily refer to the same implementation, although it may.

Throughout the specification and the claims, the following terms take at least the meanings explicitly associated herein, unless the context clearly dictates otherwise. The term "connected" means that one function, feature, structure, or characteristic is directly joined to or in communication with another function, feature, structure, or characteristic. The term "coupled" means that one function, feature, structure, or characteristic is directly or indirectly joined to or in communication with another function, feature, structure, or characteristic. The term "or" is intended to mean an inclusive "or." Further, the terms "a," "an," and "the" are intended to mean one or more unless specified otherwise or clear from the context to be directed to a singular form. By "comprising" or "containing" or "including" is meant that at least the named element, or method step is present in article or method, but does not exclude the presence of other elements or method steps, even if the other such elements or method steps have the same function as what is named.

As used herein, unless otherwise specified the use of the ordinal adjectives "first," "second," "third," etc., to describe a common object, merely indicate that different instances of like objects are being referred to, and are not intended to imply that the objects so described must be in a given sequence, either temporally, spatially, in ranking, or in any other manner.

While certain embodiments of this disclosure have been described in connection with what is presently considered to be the most practical and various embodiments, it is to be understood that this disclosure is not to be limited to the disclosed embodiments, but on the contrary, is intended to cover various modifications and equivalent arrangements included within the scope of the appended claims. Although specific terms are employed herein, they are used in a generic and descriptive sense only and not for purposes of limitation.

This written description uses examples to disclose certain embodiments of the technology and also to enable any person skilled in the art to practice certain embodiments of this technology, including making and using any apparatuses or systems and performing any incorporated methods. The patentable scope of certain embodiments of the technology is defined in the claims, and may include other examples that occur to those skilled in the art. Such other examples are intended to be within the scope of the claims if they have structural elements that do not differ from the literal language of the claims, or if they include equivalent structural elements with insubstantial differences from the literal language of the claims.

### Example Use Case

The following example use cases describe examples of typical implementations of the use of a contactless card divider (e.g., divider 400) and/or an EM shield (e.g., EM shield 500). These are intended solely for explanatory purposes and not for purposes of limitation. In one case, a wallet (e.g., wallet 150) includes two slots that can each receive a contactless card (e.g., contactless card 100). The slots are separated by a contactless card divider including a waveguide (e.g., waveguide 440). When moved near a card-reading terminal (e.g., terminal 200), one of the cards will be activated and transmit an EM wave immediately upon activation, while the activation and transmission of an EM wave by the other card(s) may be delayed by the waveguide by a predetermined time. Thus, by controlling the delay and arrangement of the contactless cards, the user may facilitate operation of the desired contactless card without having to remove any of the contactless cards from the wallet.

In some embodiments, a wallet (e.g., wallet 150) may include three slots that can each receive a contactless card (e.g., contactless card 100). At least two EM shields (e.g., EM shield 500) may be disposed within the wallet such that each EM shield separates two slots. When moved near a card-reading terminal (e.g., terminal 200), only the closest card may be activated and transmit an EM wave. The other cards will not be activated (or such activation will be reduced by the EM shields). The card in the middle slot will be prevented from activating by the EM shields unless it is removed from the slot. Thus, in this arrangement, the user may facilitate operation of the desired contactless card without having to remove any of the contactless cards from the wallet.

In some embodiments, a wallet (e.g., wallet 150) may include three slots that can each receive a contactless card (e.g., contactless card 100). Contactless cards may be placed in the first and third slots, and a separate contactless card divider (e.g., 400) with a waveguide (e.g., waveguide 440) is placed in the middle slot. When moved near a card-reading terminal (e.g., terminal 200), one of the cards will be activated and transmit an EM wave immediately, while the activation and transmission of an EM wave by the other card may be delayed by the waveguide.

## Claims

1. **Contactless card divider (400)** comprising:
a body (420) having a front side and back side and a width therebetween; and
a waveguide (440) disposed between the front and back sides, the waveguide (440) being configured to guide a first electromagnetic wave (210) emitted toward the front side through the width of the body (420) to the back side with a first predetermined delay.

2. Contactless card divider (400) of claim 1, wherein the waveguide (440) is bi-directional and further configured to guide a second electromagnetic wave (220b) emitted toward the back side through the width of the body (420) to the front side with a second predetermined delay.

3. Contactless card divider (400) of any one of claims 1 or 2, wherein one or more of the front and back sides of the body (420) is substantially rectangular.

4. Contactless card divider (400) of any one of claims 1 to 3, wherein one or more of the front and back sides of the body (420) is dimensioned approximately 85,60 mm (3.37 in) by 53,98 mm (2.125 in).

5. Contactless card divider (400) of any one of claims 1 to 4, wherein a height and length of the waveguide (440) is dimensioned approximately 90% of the front side of the body (420).

6. Contactless card divider (400) of any one of claims 1 to 5, further comprising:
a first holder configured to secure a first contactless card (100a) to the contactless card divider (400), the first holder being disposed on the front side of the body (420); and
a second holder configured to secure a second contactless card (100b) to the contactless card divider (400), the second holder being disposed on the back side of the body (420).

7. **Contactless card holder (150)** comprising:
a body defining a first internal slot (170a-h) for holding a first contactless card (100), the first internal slot (170a-h) having opposed front and back ends; and
a first waveguide (440) comprising a front side, a back side, and a width between the front and back sides, the first waveguide (440) being disposed within the body such that the front side of the first waveguide (440) faces the front end of the first internal slot (170a-h), wherein the first waveguide (440) is configured to guide a first electromagnetic wave emitted toward the front side of the first waveguide (440) through the width of the first waveguide (440) to the back side with a first predetermined delay.

8. Contactless card holder (150) of claim 7, wherein the body further defines a second internal slot (170a-h) for holding a second contactless card (100), the second internal slot (170a-h) having opposed front and back ends and being positioned proximate to the back side of the first waveguide (440) such that the back side of the first waveguide (440) faces the front end of the second internal slot (170a-h), the first waveguide (440) being bi-directional and further configured to guide a second electromagnetic wave emitted toward the back side of the first waveguide (440) through the width of the first waveguide (440) to the front side with a second predetermined delay.

9. Contactless card holder (150) of claim 8, wherein the body further defines a third internal slot (170a-h) disposed between the first internal slot (170a-h) and the second internal slot (170a-h), the first waveguide (440) being disposed within the third internal slot (170a-h), and/or
wherein the contactless card holder (150) further comprises a divider (400a-c) separating the first internal slot (170a-h) from the second internal slot (170a-h), the first waveguide (440) being disposed in the divider (400a-c).

10. Contactless card holder (150) of claim 7, further comprising:
a second waveguide (440) comprising a front side, a back side, and a width between the front and back sides, the second waveguide (440) being disposed within the body such that the front side of the second waveguide (440) faces the back end of the first internal slot (170a-h), the second waveguide (440) being configured to guide a second electromagnetic wave emitted toward the front side of the second waveguide (440) through the width of the second waveguide (440) to the back side with a predetermined delay, and/or
an electromagnetic shield (500a-c) having front and back sides, the electromagnetic shield (500a-c) disposed within the body proximate to the back end of the first internal slot (170a-h) such that the front side of the electromagnetic shield (500a-c) faces the back end of the first internal slot (170a-h), the electromagnetic shield (500a-c) being configured to substantially reduce a strength of an electromagnetic wave emitted toward the front side of the electromagnetic shield (500a-c).

11. Contactless card holder (150) of claim 10, wherein the body further comprises a second internal slot (170a-h) for holding a second contactless card (100), the second internal slot (170a-h) having opposed front and back ends and being positioned proximate to the back side of the first waveguide (440) such that the back side of the first waveguide (440) faces the front end of the second internal slot (170a-h), and preferably wherein the body further comprises a third internal slot (170a-h) for holding a third contactless card (100), the third internal slot (170a-h) having opposed front and back ends and being positioned proximate to the back side of the electromagnetic shield (500a-c) such that the back side of the electromagnetic shield (500a-c) faces the front end of the third internal slot (170a-h), the electromagnetic shield (500a-c) being further configured to substantially reduce a strength of a third electromagnetic wave emitted toward the back side of the electromagnetic shield (500a-c).

12. Contactless card holder (150) of claim 11, wherein the body further defines a third internal slot (170a-h) for holding a third contactless card (100), the third internal slot (170a-h) having opposed front and back ends and being positioned proximate to the back side of the second waveguide (440) such that the back side of the second waveguide (440) faces the front end of the third internal slot (170a-h), the second waveguide (440) being bi-directional and further configured to guide a third electromagnetic wave emitted toward the back side of the second waveguide (440) through the width of the second waveguide (440) to the front side with a third predetermined delay.

13. Contactless card holder (150) of claim 10, wherein the first waveguide (440) is bi-directional and further configured to guide a second electromagnetic wave emitted toward the back side of the first waveguide (440) through the width of the first waveguide (440) to the front side with a second predetermined delay.

14. **Contactless card holder** (150) comprising:
a body defining a first internal slot (170a-h) for slidably receiving a first contactless card (100) and a second internal slot (170a-h) for slidably receiving a second contactless card, the first and second internal slots (170a-h) each having opposed front and back ends;
a divider (400a-c) disposed within the body between the first and second internal slots (170a-h) such that it separates the back end of the first internal slot (170a-h) from the back end of the second internal slot (170a-h); and
an electromagnetic shield (500a-c) disposed within the divider (400a-c), the electromagnetic shield (500a-c) having front and back sides facing the back ends of the first and second internal slots (170a-h), respectively, and the electromagnetic shield (500a-c) being configured to substantially reduce a strength of an electromagnetic wave emitted toward one or more of the front and back sides of the electromagnetic shield (500a-c).

15. Contactless card holder (150) of claim 14,
wherein the contactless card holder (150) is configured such that a first electromagnetic wave emitted from the first contactless card (100) toward the front side of the first internal slot (170a-h) is substantially unimpeded by the contactless card holder (150), and preferably wherein the contactless card holder (150) is further configured such that a second electromagnetic wave emitted from the second contactless card (100) toward the front side of the second internal slot (170a-h) is substantially unimpeded by the contactless card holder (150), and/or
wherein the first and second contactless cards (100) each have a first surface area and the electromagnetic shield (500a-c) has a second surface area covering approximately 90% of the first surface area.
